# EUROPÄISCHE PATENTANMELDUNG

(11) **EP 2 762 545 A1**
(43) Veröffentlichungstag der Anmeldung: **06.08.2014**
(21) Anmeldenummer: 14000352.6
(22) Anmeldetag: 30.01.2014
(51) Int. Cl.: C09K 3/10, C08L 95/00, E04B 1/66, E02B 3/16

(54) **Zweikomponentige, flexible und schnell aushärtende Kombinationsabdichtung zur Abdichtung von Bauwerken, Dächern und zur Reparatur von Verkehrsflächen**

(30) Priorität: 30.01.2013 DE 102013001563
(71) Anmelder: Bornit-Werk Aschenborn GmbH, 08056 Zwickau (DE)
(72) Erfinder: Modes, Heidrun, D-08058 Zwickau (DE); Mothes, Steffi, D-08062 Zwickau (DE); Metzner, Frank, D-08058 Zwickau (DE)
(74) Vertreter: Auerbach, Bettina

(57) **Zusammenfassung**

Die Erfindung betrifft eine zweikomponentige, flexible und schnell aushärtende Kombinationsabdichtung zur Abdichtung von Bauwerken, Dächern und zur Reparatur von Verkehrsflächen, wobei die Abdichtung eine Kombination aus einer mineralischen Dichtschlämme, einer anionischen Bitumenemulsion und einer anionischen Polymerdispersion ist, die die Produktvorteile einer Dichtschlämme und einer Bitumendickbeschichtung vereint.

## Beschreibung

Die Erfindung betrifft eine zweikomponentige, flexible und schnell aushärtende Kombinationsabdichtung zur Abdichtung von Bauwerken, Dächern und zur Reparatur von Verkehrsflächen.

Aufgabe der Erfindung ist es, als Lösung eine geeignete Abdichtmasse zu schaffen, welche wetterunabhängig hydraulisch und schwundrissfrei sowie innerhalb von 24 h aushärtend ist, dabei eine hohe Druckfestigkeit aufweist, sicher und flexibel Risse am Bauwerk überbrückt und gleichzeitig eine stark reduzierte kapillare Wasseraufnahme aufweist.

Erfindungsgemäß wird die Aufgabe durch eine Kombination der Flüssigkomponente A aus einer herkömmlichen anionischen Bitumenemulsion und einer herkömmlichen anionischen Polymerdispersion und einer Pulverkomponente B aus einer herkömmlichen mineralischen Dichtschlämme gelöst, welche als homogene Mischung erst vor dem Einsatz hergestellt wird, wobei es beim Mischen darauf ankommt, dass eine homogene Mischung unter Ausschluss von Lufteinschlüssen mittels geeigneter Misch- und Rührtechnik gebildete wird.

Erfindungsgemäß ist die die Abdichtung eine Kombinationsabdichtung, welche die Produktvorteile einer mineralischen Dichtschlämme, die zwar weniger elastisch ist, dafür aber schnell hydraulisch aushärtet und einer Bitumendickbeschichtung, die wiederum sehr elastisch ist, dafür aber langsamer austrocknet, vereint. Aus dieser Kombination ergibt sich ein weiterer Vorteil, der sich in der Reduzierung der kapillaren Wasseraufnahme der Abdichtung wieder spiegelt. Beim schnellen Aushärten einer Dichtschlämme kommt es zur Ausbildung von Kapillaren im Gefüge, welche die nachträgliche Wasseraufnahme der ausgehärteten Abdichtung am Bauwerk begünstigen würde. In Verbindung mit der Bitumenemulsion können diese Kapillaren in ihrer Ausbildung bereits während des Abbindeprozesses erheblich reduziert werden und die sich dennoch ausgebildeten Kapillaren werden im Übrigen durch das in der Bitumenemulsion enthaltene Bitumen abgedichtet.

Die zweikomponentige, flexible und schnellaushärtende Kombinationsabdichtung ist wetterunabhängig hydraulisch aushärtend und weist eine hohe Druckfestigkeit, wie die einer mineralischen Dichtschlämme, auf. Dabei ist sie aber gleichzeitig flexibel und riss- überbrückend wie eine Bitumendickbeschichtung.

Die fertig für die Anwendung aufbereitete Kombinationsabdichtung härtet innerhalb von 24 Stunden zu einer schwundrissfreien, flexiblen und druckbeständigen Abdichtung aus.

Dadurch kann sie wie eine Bitumendickbeschichtung im Fundamentbereich von Bauwerken, wie auch als mineralische Dichtschlämme im Sockelbereich von Bauwerken und zur Abdichtung von Behältern eingesetzt werden.

Sie kann weiterhin zur Abdichtung im Dachbereich und als Kleber für Dämmplatten und zur Reparatur und/oder Abdichtung in Verkehrsflächen aus Asphalt und/oder Beton eingesetzt werden, wobei sie für alle Einsatzzwecke überstreichbar und überspachtelbar ist.

Die Abdichtung enthält in der Flüssigkomponente A eine handelsübliche, anionische Bitumenemulsion mit einem Bitumenanteil in der Emulsion von 50 - 65 % und eine handelsübliche, anionische Polymerdispersion auf der Basis von Acrylat- und/oder Styrol-Acrylat- und /oder Styrol-Butadien- und/oder Chloropren- und /oder Acrylnitril- und /oder Vinylacetat- Copolymeren mit einem Polymeranteil in der Dispersion von 35% - 65%.

In der Flüssigkomponente A beträgt der Anteil der anionischen Bitumenemulsion 10- 70 Masse-%, vorzugsweise 30-50 Masse-%, und der Anteil der anionischen Polymerdispersion 30-90 Masse-%, vorzugsweise 50 - 70 Masse-%.

Die zweite Komponente B der Kombinationsabdichtung ist ein Pulver-Gemisch aus hydraulischen Zuschlagsstoffen, latent hydraulischen Zuschlagsstoffen, nichthydraulischen Zuschlagsstoffen, Leichtfüllstoffen und Füllstoffen.

Die hydraulischen Zuschlagsstoffe sind dabei Zemente und/ oder hydraulischer Kalk und sind in einem Anteil von 25 - 40 Masse-% in der Pulverkomponente enthalten. Die latent hydraulischen Zuschlagsstoffe sind Stein- und / oder Braunkohlenflugasche und /oder Hüttensand und sind in einem Anteil von 15-30 Masse-% in der Pulverkomponente enthalten.

Die nichthydraulischen Zuschlagsstoffe sind Gips und/ oder Anhydrit und /oder Kalk und/oder Kalkhydrate und sind in einem Anteil von 1-5 Masse-% in der Pulverkomponente enthalten. Die Leichtfüllstoffe sind ein Gemisch aus Glas- und/ oder Keramik- und /oder Polymerhohlkugeln und/ oder Hohlkugel aus expandiertem Polystyrol und sind in einem Anteil von 5 - 15 Masse-% in der Pulverkomponente enthalten. Die Füllstoffe sind Silikate und/ oder Karbonate und/ oder Sulfate und/ oder Gesteinsmehle und/ oder Quarzmehle und/ oder Quarzsande und sind in einem Anteil von 10 - 55 Masse-% in der Pulverkomponente enthalten.

Als Gesteinskörnungen kommen natürliche Gesteinskörnungen aus mineralischem Vorkommen mit einer Korngröße von 0,08-16 mm, vorzugsweise 0,08- 8 mm und in einem Anteil von 0 - 40 Masse-% in der Pulverkomponente zum Einsatz.

Bei der erfindungsgemäßen Kombinationsabdichtung kann die Flüssigkomponente A mit der Pulverkomponente B in verschiedenen Masseverhältnissen, vorzugsweise 3:2 oder 2:1 oder 1:1 abgemischt werden.

Mit diesen erfinderischen Mitteln wurde eine zweikomponentige Kombinationsabdichtung geschaffen, welche sich dadurch auszeichnet, dass sie wetterunabhängig hydraulisch aushärtet und hohe Druckfestigkeiten, wie eine mineralische Dichtschlämme aufweist und dabei gleichzeitig flexibel und Risse überbrückend wie eine Bitumendickbeschichtung ist. Gleichzeitig reduziert sie die kapillare Wasseraufnahme der Abdichtung, was den zu schützenden Untergrund zusätzlich abdichtet.

Das vor der Anwendung fertig gemischte Produkt härtet innerhalb von 24 Stunden zu einer schwundrissfreien, flexiblen und druckbeständigen Abdichtung aus und kann wie eine Bitumendickbeschichtung im Fundamentbereich von Bauwerken oder wie eine mineralische Dichtschlämme im Sockelbereich von Bauwerken und zur Abdichtung von Behältern, außerdem zur Abdichtung im Dachbereich und als Kleber für Dämmplatten eingesetzt werden. Es besteht nunmehr auch die Möglichkeit mit dieser Kombinationsabdichtung die Reparatur und/oder Abdichtung in Verkehrsflächen aus Asphalt und/oder Beton vorzunehmen.

Ein weiterer Vorteil dieser Kombinationsabdichtung besteht in der nunmehr geschaffenen Möglichkeit, dies bei Bedarf zu überstreichen und/oder zu überspachteln.

Mit der sehr schnellen und weitestgehend witterungsabhängige Durchtrocknung ist diese Kombinationsabdichtung bereits nach 24 Stunden mechanisch belastbar ist. Auf Grund der Materialstruktur aus einem Bitumen-Polymer-Komplex besteht nunmehr die Möglichkeit des Auftrags auch von geringen Schichtdicken ohne Verstärkungseinlage. Die Kombinationsabdichtung ist sowohl im Bereich mit Erdberührung als auch im Sockelbereich einsetzbar, wodurch sich ein bei dieser Anwendung sonst üblicher Materialwechsel erübrigt.

Die Erfindung soll nachstehend mit Ausführungsbeispielen näher erläutert werden.

### Ausführungsbeispiel 1:

Für eine schnell aushärtende Bauwerks- und Dachabdichtung werden erfindungsgemäß
100 Masse- % Flüssigkomponente A, bestehend aus
- 50 Masse- % handelsüblicher, anionischer Bitumenemulsion und
- 50 Masse- % Polymerdispersion Lipren B (Fa. Synthomer)
mit
100 Masse- % Pulverkomponente B, bestehend aus
- 27 Masse-% Portlandzement,
- 13 Masse-% Tonerdeschmelzzement,
- 18 Masse-% Steinkohlenflugasche,
- 2,5 Masse-% Anhydrit,
- 2,5 Masse-% Kalkhydrat,
- 15 Masse-% keramische Mikrohohlkugeln,
- 10 Masse-% Quarzsand und
- 12 Masse-% Kalksteinmehl
unmittelbar vor dem Auftragen homogen mittels geeigneter Rühr- und Mischtechnik im Verhältnis 1 : 1 vermischt.
Eine derartig zusammengesetzte Kombinationsabdichtung härtet innerhalb von 24 Stunden schwundrissfrei aus. Sie ist flexible und druckbeständig und kann spätestens nach 24 h sowohl mechanisch als auch durch Witterungseinflüsse belastet werden.

### Ausführungsbeispiel 2:

Für eine schnell aushärtende Reparaturmasse für Verkehrsflächen werden erfindungsgemäß
100 Masse-% Flüssigkomponente A, bestehend aus
- 40 Masse-% handelsüblicher, anionischer Bitumenemulsion und
- 60 Masse-% Polymerdispersion Lipren B (Fa. Synthomer)
mit
100 Masse-% Pulverkomponente B, bestehend aus
- 20 Masse-% Portlandzement
- 20 Masse-% Tonerdeschmelzzement
- 15 Masse-% Steinkohlenflugasche
- 5 Masse-% Kalkhydrat
- 15 Masse-% keramische Mikrohohlkugeln
- 25 Masse-% Quarzit-Edelsplitt mit einer Körnung von 2mm bis 5 mm
direkt vor der Verarbeitung im Verhältnis 3: 2 homogen mittels geeigneter Mischtechnik vermischt.

Auf Grund der Materialstruktur der geschaffenen Kombinationsabdichtung aus einem Bitumen-Polymer-Komplex ist nunmehr auch die Möglichkeit des Auftrags von geringen Schichtdicken ohne Verstärkungseinlage gegeben. Die Kombinationsabdichtung ist sowohl im Bereich mit Erdberührung als auch im Bereich des Straßenbelages einsetzbar.

Dadurch erübrigt sich ein sonst üblicher und notwendiger Materialwechsel, was zu einem erheblichen zeitlichen und verfahrenstechnischen Vorteil bei der Reparatur von Straßenbelägen führt.

## Patentansprüche

1. Zweikomponentige, flexible und schnellaushärtende Kombinationsabdichtung zur Abdichtung von Bauwerken, Dächern und zur Reparatur von Verkehrsflächen, **dadurch gekennzeichnet, dass**
die Kombinationsabdichtung aus einem Gemisch einer Flüssigkomponente A, bestehend aus einer herkömmlichen anionischen Bitumenemulsion und einer herkömmlichen anionischen Polymerdispersion als Gemisch und aus einer Pulverkomponente B aus mineralischer Dichtschlämme besteht und dass die Komponenten A und B kurz vor ihrem Einsatz auf der Baustelle zu einem Gemisch mit geeigneter Misch- und Rührtechnik homogen zusammengefügt und aufbereitet werden.

2. Zweikomponentige, flexible und schnellaushärtende Kombinationsabdichtung nach dem Anspruch 1, **dadurch gekennzeichnet, dass** die Kombinationsabdichtung als die Flüssigkomponente bildende Komponente A eine handelsübliche, anionische Bitumenemulsion mit einem Bitumenanteil in der Emulsion von 50 - 65 % und eine handelsübliche, anionische Polymerdispersion auf der Basis von Acrylat- und/oder Styrol-Acrylat- und /oder Styrol-Butadien- und/oder Chloropren- und /oder Acrylnitril- und /oder Vinylacetat- Copolymeren mit einem Polymeranteil in der Dispersion von 35% - 65% enthält.

3. Zweikomponentige, flexible und schnellaushärtende Kombinationsabdichtung nach einem der Ansprüche 1 und 2, **dadurch gekennzeichnet, dass** die, die Pulverkomponente B bildende mineralische Dichtschlämme ein PulverGemisch aus hydraulischen Zuschlagsstoffen, latent hydraulischen Zuschlagsstoffen, nichthydraulischen Zuschlagsstoffen, Leichtfüllstoffen und Füllstoffen und/oder Gesteinskörnungen ist.

4. Zweikomponentige, flexible und schnellaushärtende Kombinationsabdichtung nach einem der Ansprüche 1 bis 3, **dadurch gekennzeichnet, dass** in der Flüssigkomponente der Anteil der anionischen Bitumenemulsion 10- 70 Masse-%, vorzugsweise 30-50 Masse-%, und der Anteil der anionischen Polymerdispersion 30-90 Masse-%, vorzugsweise 50 - 70 Masse-%, beträgt.

5. Zweikomponentige, flexible und schnellaushärtende Kombinationsabdichtung nach einem der Ansprüche 1 bis 4, **dadurch gekennzeichnet, dass** je nach Anwendungsfall
- die hydraulischen Zuschlagsstoffe Zemente und/ oder hydraulischer Kalk sind und in einem Anteil von 25 - 40 Masse-% in der Pulverkomponente enthalten sind,
- die latent hydraulischen Zuschlagsstoffe Stein- und / oder Braunkohlenflugasche und /oder Hüttensand sind und in einem Anteil von 15-30 Masse-% in der Pulverkomponente enthalten sind,
- die nichthydraulischen Zuschlagsstoffe Gips und/ oder Anhydrit und /oder Kalk und/oder Kalkhydrate sind sowie als ein Anteil von 1-5 Masse-% in der Pulverkomponente enthalten sind,
- die Leichtfüllstoffe ein Gemisch aus Glas- und/ oder Keramik- und /oder Polymerhohlkugeln und/ oder Hohlkugel aus expandiertem Polystyrol sind und in einem Anteil von 5 -15 Masse-% in der Pulverkomponente enthalten sind,
- die Füllstoffe Silikate und/ oder Karbonate und/ oder Sulfate und/ oder Gesteinsmehle und/ oder Quarzmehle und/ oder Quarzsande sind und in einem Anteil von 10 - 55 Masse-% in der Pulverkomponente enthalten sind,
- die Gesteinskörnungen natürliche Gesteinskörnungen aus mineralischen Vorkommen sind, eine Korngröße von 0,08-16 mm, vorzugsweise 0,08-8 mm besitzen sowie als ein Anteil von 0 - 40 Masse-% in der Pulverkomponente enthalten sind.

6. Zweikomponentige, flexible und schnellaushärtende Kombinationsabdichtung nach einem der Ansprüche 1 bis 5, **dadurch gekennzeichnet, dass** je nach Anwendungsfall die Flüssigkomponente mit der Pulver-Komponente in verschiedenen Masseverhältnissen, vorzugsweise 3:2 und/ oder 2:1 und/ oder 1:1 abgemischt werden kann.
